# EUROPEAN PATENT SPECIFICATION

(11) **EP 1 300 033 B1**
(45) Date of publication and mention of the grant of the patent: **02.05.2007**
(21) Application number: 01943735.9
(22) Date of filing: 27.06.2001
(51) Int. Cl.: H04Q 7/22

(54) **METHOD AND APPARATUS FOR SELECTING A TRANSMISSION PROCEDURE**
VERFAHREN UND VORRICHTUNG ZUM AUSWÄHLEN EINER ÜBERTRAGUNGSPROZEDUR
PROCEDE ET APPAREIL POUR SELECTIONNER UNE PROCEDURE DE TRANSMISSION

(30) Priority: 30.06.2000 GB 0015976
(43) Date of publication of application: 09.04.2003
(73) Proprietor: MOTOROLA, INC., Schaumburg, IL 60196 (US)
(72) Inventor: GHOSH, Amitawa, Arlington Heights IL 60004 (US)
(74) Representative: Jepsen, René Pihl
(86) International application number: PCT/IB2001/001177
(87) International publication number: WO 2002/001897

(56) References cited:
- WO-A-00/51245
- WO-A-01/63851
- WO-A-96/37079
- WO-A-99/52307
- WO-A-99/66748
- BAIER A ET AL: "MULTI-RATE DS-CDMA RADIO INTERFACE FOR THIRD-GENERATION CELLULAR SYSTEMS" IEE EUROPEAN CONFERENCE ON MOBILE AND PERSONAL COMMUNICATIONS, XX, XX, 13 December 1993 (1993-12-13), pages 255-260, XP000610288

## Description

### Field of the Invention

This invention relates to transmission procedures in cellular communications systems. More particularly, this invention relates to the selection of procedures for the transmission of data packets in third generation cellular communications systems.

### Background of the Invention

Wireless communications systems typically comprise a number of radios, which may be linked in a variety of ways. These 'radios' may be mobile phones. They may alternatively be mobile or portable radios, usually referred to as 'PMR' radios. The term mobile station (MS) will be used henceforth for mobile telephones and portable- or mobile radios.

The mobile stations may communicate through base stations of the system. Each base station typically serves a cell of the wireless communications system. The base stations offer interconnection either to the fixed line telephone system ('POTS'), or to other mobile stations in the system. Mobiles that communicate through base stations may or may not be in the same cell of the network. Alternatively, mobile stations may communicate directly with one another, in 'direct mode' communication.

In third generation partnership project (3GPP) wideband code division multiple access (WCDMA) systems and other such third generation (3G) systems, there are various methods which may be utilised for the transmission of packet data for both uplink and downlink. The communication between a mobile subscriber or user equipment (UE) and a network is termed uplink and between the network and the UE is termed downlink.

Examples of cellular communication systems can be found in Patent Cooperation Treaty Patent Application WO 1999/66748 which describes a system that dynamically adapts a connection state for a mobile communication device wherein a connection is adapted to an optimal state based on one or more conditions/parameters relating to the connection, such as e.g. the amount of data in queue for a packet data connection, and in Patent Cooperation Treaty Patent Application WO 1999/52307 which describes a system for allocation resources in a Universal Mobile Telephone System wherein the RNC selects the most appropriate type of channel for a transmission based on traffic conditions and/or on quality of service parameters.

Currently, three kinds of transport/logical channel are provided for uplink packet transmission. These channels enable the transmission of packets from the UE to the network. The first channel is the random access channel (RACH), the second is the common packet channel (CPCH) or enhanced access channel (for CDMA 2000) and the third is the dedicated channel (DCH).

Similarly, there are currently two kinds of transport logic channel provided for downlink packet transmission. These are the forward access channel (FACH) and the downlink shared channel (DSCH). The latter of these two is associated with the dedicated channel (DCH) for downlink.

At the present time, a network or system has no knowledge of which procedure should be invoked by the Radio Network Controller (RNC) for an uplink or downlink packet data transfer. As such, it is not possible for the system to utilise the most suitable channel or procedure without being instructed which channel is the most suitable. There is thus a problem in that the system is unable to optimise its performance. Additionally, there is no provision in the 3GPP specifications which provides for a procedure enabling selection of an appropriate packet data transfer procedure.

The present invention addresses one or more of the above disadvantages.

### Summary of the Invention

According to a first aspect of the invention, there is provided a method of selecting a transmission procedure in accordance with claim 1.

According to a second aspect of the invention there is provided an apparatus for selecting a transmission procedure in accordance with claim 11.

If a uni-directional transmission on downlink is required, the BTS [Node B] from which the downlink transmission is to originate computes the size of a packet data queue and then measures an amount of unused linear power amplifier (LPA) capacity available to it.

Similarly, if a bi-directional transmission is required, a dedicated channel (DCH) may be used on uplink and a dedicated shared channel (DSCH) in association with the dedicated downlink channel (DCH) may be used on downlink irrespective of the size of the queue of packet data awaiting transmission.

### Brief Description of the Drawings

Embodiments of the present invention will now be described, by way of example only, with reference to the drawings of which:
Figure 1 depicts the interaction between a 3G cellular communications network and its users;
Figure 2 shows a flow diagram illustrating the selection of transmission procedure for a uni-directional packet data transfer on uplink in accordance with the present invention;
Figure 3 shows a flow diagram illustrating the selection of transmission procedure for a uni-directional packet data transfer on downlink in accordance with the present invention;
Figure 4 illustrates the general scheme of a wireless communications system 10 operating in accordance with the present invention; and
Figure 5 illustrates a mobile station (MS) for use in the system of Figure

### Description of the Preferred Embodiments

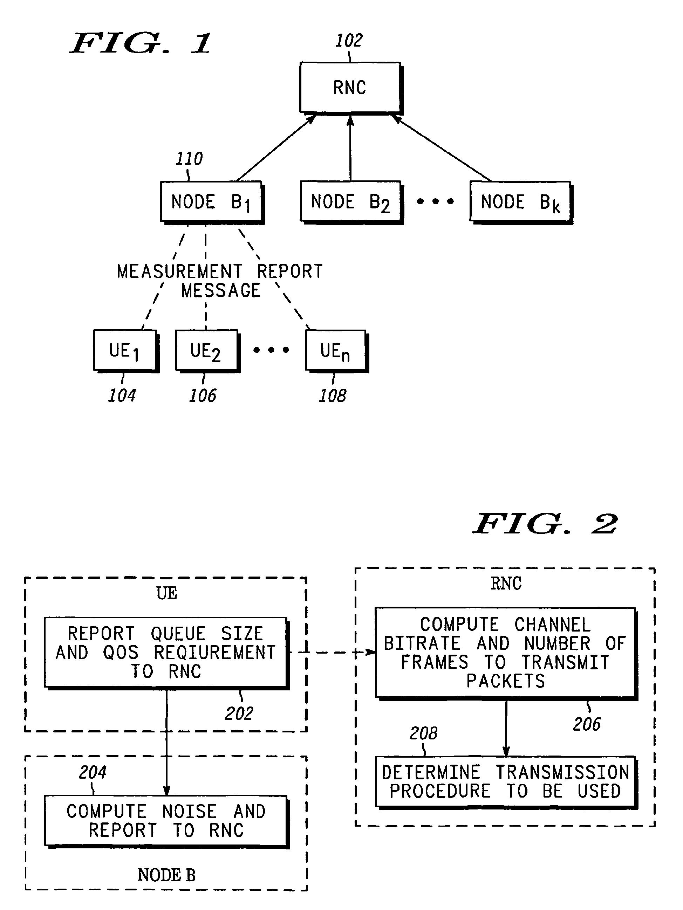

As may be seen in Figure 1, in a third generation cellular communications system, a radio network controller (RNC) 102 communicates with a number (I to k) of BTS's or Node B's which in turn communicate with a number (1 to n) of users 104,106,108 known as user equipment (UE). The user equipment may be a mobile telephone, laptop computer, paging device, etc. Communication takes place through a source node B 110. Each source node B is a component of the network and is in communication with the RNC. These elements equate to the base station controller (BSC), mobile station or subscriber (MS) and base transceiver station (BTS) of a global mobile communications system (GSM) or general packet radio system (GPRS).

The method of selecting an appropriate transmission procedure depends upon the type of transmission required. The available types of transmission may be expressed as i) uni-directional packet data transfer on uplink, ii) uni-directional packet data transfer on downlink, and iii) bi-directional packet data transfer on uplink and downlink. The RNC is aware of the type of transmission to be carried out because it is either initiating transmission, or is involved in the allocation of resource for a requested uplink. As such, the selection of transmission procedure is carried out in accordance with the type of transmission to be made. The selection for each type of transmission is described in detail below.

The choice of logical channel to be utilised in packet data transfer, whilst dependent upon the type of transmission to be made (as detailed above), is primarily dependent upon a number of factors. These factors include the queue size at the UE or at the RNC for a particular UE, i.e. the number of data packets awaiting transmission, the quality of service (QoS) requirements associated with the queued data packets, the number of voice and data users currently using the system, the location of those users, the current level of interference being experienced and the LPA capacity, etc.

The choice of logical channel for uni-directional packet data transfer on uplink is detailed with regard to Figure 2. Function box 202 shows the step of a UE sending a measurement report message to an RNC via a source node B. The measurement report message comprises queue size information, QoS requirements of the packets accumulated at the UE, the number of locked fingers and pilot strength measurement messages, etc. This step is carried out by each UE currently operating within the system which requires uplink. Function box 204 details the step of each node B, which is handling within its area of operation a UE requiring uplink, computing the noise rise (increase in noise) which it experiences due to UE activity and reporting this value to the RNC. As stated previously, the node B in a 3G system is equivalent to the BTS in a GSM or GPRS system. As such, each node B is responsible for the UEs within its' specified area (the area of the cell within which it operates).

When all the above information has been received, the RNC computes the information/channel bit rate, the SF and the number of data frames which will be required in order to transmit the queued data packets at the computed rate. These values are calculated based upon the queue size (function box 206) and other system information such as noise rise, etc. Data is transmitted using physical channels at an information bit rate computed at the RNC for a predetermined number of frames to the destination device. Each frame has a specific duration and comprises a number of time slots which may be utilised for transmission by the UE or node B in uplink and downlink.

Function box 208 shows an example step of the RNC determining which of the three logical channels suitable for use in uplink should be utilised. Such determination is carried out in accordance with the following sequential conditions:

| Condition 1: | | | | | | | |
|---|---|---|---|---|---|---|---|
| **IF** | number of frames required to transmit packets | < T₁ | **AND** | Channel bit rate | < R₁ | **USE** | Random Access Channel (RACH) |

wherein T₁ and R₁ are thresholds, the values of which are implementation dependent and are set by the system operator in the RNC.

| Condition 2: | | | | | | | |
|---|---|---|---|---|---|---|---|
| **IF** | T₁ < | number of frames required to transmit packets | < | T₂ **AND** | R₁ < | channel bit rate | < R₂ |
| **AND** | Noise rise at target node B | < I₁ | **AND** | Number of voice users | < V₁ | **USE** | Common Packet Channel (CPCH) or Enhanced Access |
| | | | | | | | Channel (EACH) |

again, T₁, T₂, R₁, R₂, I₁ and V₁ are thresholds, the values of which are implementation dependent and are system operator defined. Additionally, T₂ > T₁ and R₂ > R₁.

### Condition 3:

**IF** neither of conditions 1 or 2 are **USE** Dedicated Channel (DCH) met

The above conditions show a typical way of determining which logical channel is to be used for transferring data packets on uplink. Thresholds therein are set to values which ensure that RACH is used for short messages or transmissions (1 or 2 frames for example), CPCH or EACH is used for medium length messages or transmissions (3 to 10 frames for example) and DCH is used for long messages or transmissions (> 10 frames for example).

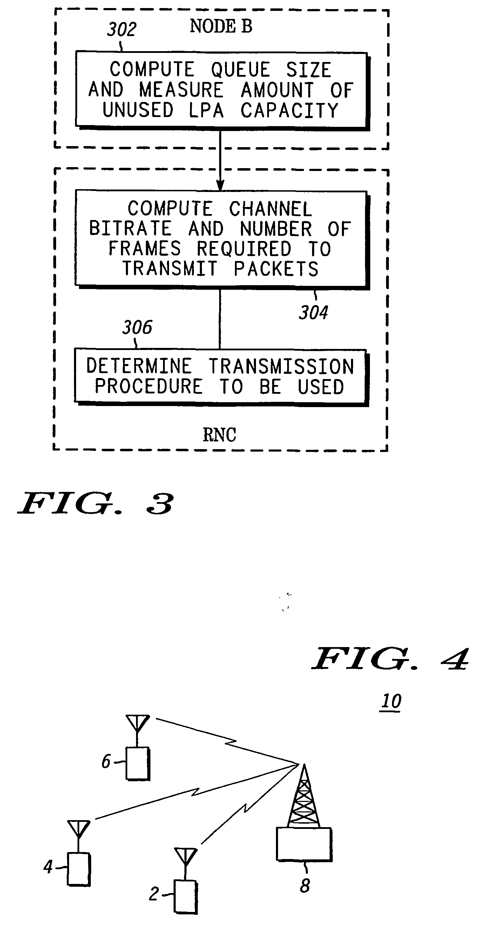

The choice of logical channel for uni-directional packet data transfer on downlink is illustrated in Figure 3. As may be seen, for downlink, the packets to be transmitted queue up at the RNC for the particular user. The Node B computes the queue size and measures the amount of unused linear power amplifier (LPA) capacity, which it then forwards to the RNC. The LPA is a hardware component of the system which resides within node B.

Function box 304 depicts the step of the RNC utilising the provided information (in the form of queue size) to compute the channel bit rate and the number of frames required in order to transmit the queuing data packets. This information is then used in the following condition to determine which of the two logic channels available for downlink should be used (function box 306):

| | | | | | | |
|---|---|---|---|---|---|---|
| **IF** | number of < frames required to transmit packets | T₃ | **AND** | channel bit rate | < | R₃ |
| **USE** | Forward Access Channel (FACH) | **OTHERWISE** | **USE** | Dedicated Shared Channel (DSCH) in association with Decicated Channel (DCH) | | |

once again, T₃ and R₃ are implementation dependent thresholds, the values of which are set by the system operator.

The above condition ensures that FACH is used for shorter duration transmissions (1 to 2 frames for example) and that DSCH (in association with downlink DCH) is used for longer duration transmissions (greater than 2 frames for example).

The final type of transmission that may be utilised is bi-directional packet data transfer on uplink and downlink. When such a transmission is to be initiated, no determination of transmission procedure to be used needs to be carried out. In this instance, DCH should always be used on uplink, and DSCH associated with a DCH should always be used on downlink, utilising a rapid initialisation procedure for packet data transfer, regardless of queue size. Rapid initialisation procedure is a procedure which involves the termination of the dedicated channel when no data requires transmission, and its associated rapid restart when data next requires transmission. Similarly, this allows for transmission of packets in bursts.

The above methodology has the advantage of ensuring that the most appropriate and suitable logic channel is utilised for the transmission of data packets whether on uplink or downlink, and whether the transmission is to be uni-directional or bi-directional. The logic channel is generally chosen in view of the prevailing system state and conditions, in order to refine the choice and optimise the system performance.

In addition to the method described above, there is provided a system comprising the means to carry out that method, thereby achieving the advantages inherent therein.

Figure 4 illustrates the general scheme of one example of a wireless communications system 10 in accordance with the present invention. Mobile stations 2, 4 and 6 of Figure 4 can communicate with a base station 8. Mobile stations 2, 4 and 6 could be mobile telephones. Alternatively, they could be PMR radios, i.e. portable radios or mobile radios mounted in vehicles.

Each of the mobile stations shown in Figure 4 can communicate through base station 8 with one or more other mobile stations. If mobile stations 2, 4 and 6 are capable of direct mode operation, then they may communicate directly with one another or with other mobile stations, without the communication link passing through base station 8.

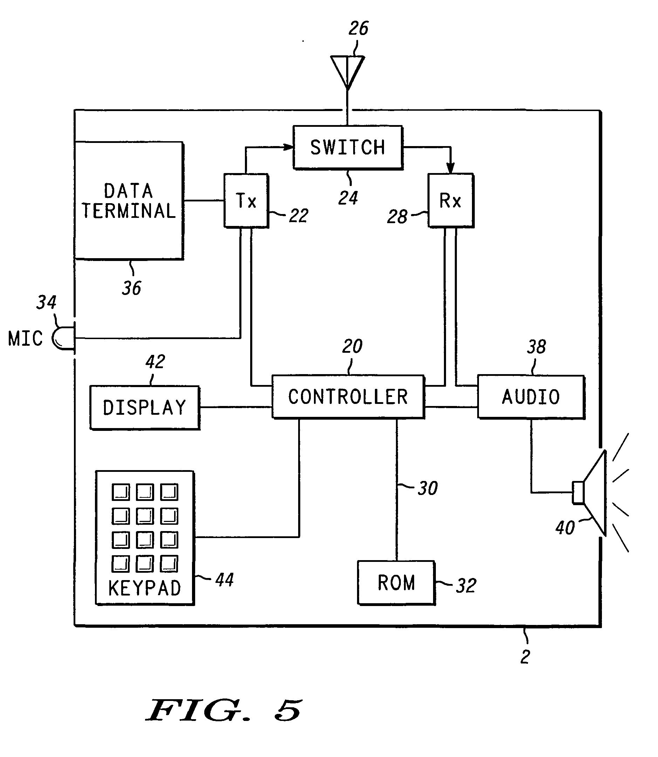

Figure 5 illustrates a mobile station (MS) operating in accordance with the present invention. The mobile station (MS) of Figure 5 is a radio communication device, and may be either a portable- or a mobile radio, or a mobile telephone.

The mobile station 2 of Figure 5 can transmit speech from a user of the mobile station. The mobile station comprises a microphone 34 which provides a signal for transmission by the mobile station. The signal from the microphone is transmitted by transmission circuit 22. Transmission circuit 22 transmits via switch 24 and antenna 26.

Mobile station 2 also has a controller 20 and a read only memory (ROM) 32. Controller 20 may be a microprocessor.

ROM 32 is a permanent memory, and may be a non-volatile Electrically Erasable Programmable Read Only Memory (EEPROM). ROM 32 is connected to controller 20 via line 30.

The mobile station 2 of Figure 5 also comprises a display 42 and keypad 44, which serve as part of the user interface circuitry of the mobile station. At least the keypad 44 portion of the user interface circuitry is activatable by the user. Voice activation of the mobile station may also be employed. Similarly, other means of interaction with a user may be used, such as for example a touch sensitive screen.

Signals received by the mobile station are routed by the switch to receiving circuitry 28. From there, the received signals are routed to controller 20 and audio processing circuitry 38. A loudspeaker 40 is connected to audio circuit 38. Loudspeaker 40 forms a further part of the user interface.

A data terminal 36 may be provided. Terminal 36 would provide a signal comprising data for transmission by transmitter circuit 22, switch 24 and antenna 26. Data received by receiving circuitry 28 may also be provided to terminal 36. The connection to enable this has been omitted from Figure 5 for clarity of illustration.

It will be appreciated that although this method has been described with reference to wideband code division multiple access (WCDMA) systems, it applies equally to other third generation cellular communications systems, including universal mobile telecommunications systems (UMTS).

It will of course be understood that the present invention has been described by way of example only, and that modifications of detail can be made within the scope of the appended claims.

## Claims

1. A method of selecting a transmission procedure for transmitting queued data packets in a cellular communications system, the method being **characterised by**, if a uni-directional transmission on an uplink is required, performing the steps of:
a user equipment, UE, requiring an uplink, transmitting (202) a measurement report message to a radio network controller, RNC;
each node B handling the UE requiring the uplink computing (204) its noise rise and reporting it to the RNC;
the RNC computing (206) an information/channel bit rate, a corresponding spread factor and a number of frames required to transmit the queued packets using the supplied information; and
the RNC determining (208) the most appropriate channel to transmit upon.

2. A method as claimed in claim 1, wherein the measurement report message includes packet queue size, associated quality of service requirements, pilot strength and number of fingers locked.

3. A method as claimed in claim 2, wherein the bit rate, the spread factor and the number of frames are calculated from the packet queue size.

4. A method as claimed in claim 3, wherein the transmission procedure is chosen in accordance with at least one condition.

5. A method as claimed in claim 4, wherein the following conditions are utilised;
| Condition 1: | | | | | | | |
|---|---|---|---|---|---|---|---|
| **IF** | number of frames required to transmit packets | < T₁ | **AND** | Channel bit rate | < R₁ | **USE** | Random Access Channel, RACH |
| Condition 2: | | | | | | | |
|---|---|---|---|---|---|---|---|
| **IF** T₁ | < | number of frames required to transmit packets | < | T₂ **AND** | R₁ < | channel bit rate | < R₂ |
| **AND** | Noise rise at target node B | < I₁ | **AND** | Number of voice users | < V₁ | **USE** | Common Packet Channel, CPCH, or Enhanced Access Channel, EACH |
| Condition 3: | | | |
|---|---|---|---|
| **IF** | Neither of conditions 1 or 2 are met | **USE** | Dedicated Channel, DCH |
wherein T₁, T₂, R₁, R₂, I₁ and V₁ are implementation dependent thresholds.

6. A method as claimed in any one of claims 1 to 5, further **characterised by**, if a uni-directional transmission on downlink is required, performing the steps of:
the node B computing (302) a size of a queue of packet data waiting for a particular UE and measuring (302) an amount of unused linear power amplifier capacity, and a number of voice users;
the RNC computing (304) an information/channel bit rate and, a corresponding spread factor for a number of frames required to transmit the queued packets from the queue size; and
the RNC determining (306) the most appropriate channel to transmit upon.

7. A method as claimed in claim 6, wherein the transmission procedure is chosen in accordance with at least one condition.

8. A method as claimed in claim 7, wherein the following condition is utilised:
| | | | | | | | |
|---|---|---|---|---|---|---|---|
| **IF** | Number of frames required to transmit packets | < | T₃ | **AND** | Channel bit rate | < | R₃ |
| **USE** | Forward Access Channel, FACH | | **OTHERWISE** | **USE** | Dedicated Shared Channel, DSCH in association with Dedicated Channel, DCH | | |
wherein T₃ and R₃ are implementation dependent thresholds.

9. A method as claimed in claim 1, wherein if a bi-directional transmission is required, a dedicated channel, DCH, is used on uplink and a dedicated shared channel, DSCH, in association with the DCH is used on downlink, irrespective of a queue size of packet data awaiting transmission.

10. A method as claimed in claim 9, further comprising the use of a rapid initialisation procedure in association with packet data transfer on DCH and DSCH.

11. Apparatus for selecting a transmission procedure for transmitting queued data packets in a cellular communications system for a required uni-directional transmission on an uplink, the apparatus including;
a node B;
a radio network controller, RNC;
the apparatus **characterized in that**:
a user equipment, UE, (104) that requires an uplink is arranged to transmit a measurement report to the radio network controller (102) ;
the node B (110) handling the UE requiring the uplink is adapted to compute its noise rise and report it to the RNC (102); and
the RNC (102) is adapted to compute an information/channel bit rate, a corresponding spread factor and a number of frames required to transmit the queued data packets using the supplied information and to determine the most appropriate channel to transmit on.

## Patentansprüche

1. Verfahren zum Auswählen einer Übertragungsprozedur zum Senden in einer Warteschlange befindlicher Datenpakete in einem zellularen Kommunikationssystem, **gekennzeichnet durch** die Ausführung der folgenden Schritte, wenn eine Übertragung in eine Richtung über eine Aufwärtsverbindung erforderlich ist:
Senden (202) einer Messprotokollnachricht an eine Funknetzsteuerung RNC **durch** ein Benutzergerät UE, das eine Aufwärtsverbindung benötigt,
Berechnen (204) der Zunahme des Rauschens und seine Meldung an die RNC **durch** jeden Knoten B, der das UE versorgt, das die Aufwärtsverbindung benötigt,
Berechnen (206) einer Informations-/Kanalbitrate, eines entsprechenden Spreizfaktors und einer zum Senden der in der Warteschlange befindlichen Pakete erforderlichen Anzahl an Rahmen unter Verwendung der bereitgestellten Informationen **durch** die RNC und
Bestimmen (208) des geeignetsten Kanals für die Übertragung **durch** die RNC.

2. Verfahren nach Anspruch 1, bei dem die Messprotokollnachricht die Größe der Paketwarteschlange, die zugehörigen Anforderungen an die Qualität des Dienstes, die Pilot-Stärke und die Anzahl der verriegelten Finger enthält.

3. Verfahren nach Anspruch 2, bei dem die Bitrate, der Spreizfaktor und die Anzahl der Rahmen anhand der Größe der Paketwarteschlange berechnet werden.

4. Verfahren nach Anspruch 3, bei dem die Übertragungsprozedur nach Maßgabe mindestens einer Bedingung ausgewählt wird.

5. Verfahren nach Anspruch 4, bei dem die folgenden Bedingungen verwendet werden:
| Bedingung 1: | | | | | | | |
|---|---|---|---|---|---|---|---|
| WENN | Anzahl der zur Übertragu ng der Pakete erforderl ichen Rahmen | < T₁ | UND - | Kanal bit - rate | < R₁ | VERW ENDE | Direktzugriffskanal RACH |
| Bedingung 2: | | | | | | | |
|---|---|---|---|---|---|---|---|
| WENN | T₁ < | Anzahl der zur Übertra gung der Pakete | < T₂ | UND | R₁ < | Kana lbit rate | < R₂ |
| | | erforde rlichen Rahmen | | | | | |
| UND | Zunahme des Rausche ns am Zielkno ten B | < I₁ | UND | Anzahl der Sprachbenutze r | < V₁ | VERW ENDE | gemeins amen Paketka nal CPCH oder Kanal für den erweite rten Zugriff EACH |
| Bedingung 3: | | | |
|---|---|---|---|
| WENN | keine der Bedingungen 1 und 2 erfüllt ist | VERWENDE | zugewiesenen Kanal DCH |
wobei T₁, T₂, R₁, R₂, I₁ und V₁ implementierungsabhängige Schwellenwerte sind.

6. Verfahren nach einem der Ansprüche 1 bis 5, ferner **gekennzeichnet durch** das Ausführen der folgenden Schritte, wenn eine Übertragung in einer Richtung über eine Abwärtsverbindung erforderlich ist:
Berechnen (302) der Größe der Warteschlange der auf ein bestimmtes UE wartenden Paketdaten und Messen (302) einer Größe von nicht genutzter linearer Leistungsverstärkerkapazität und einer Anzahl von Sprachnutzern **durch** den Knoten B,
Berechnen (304) einer Informations-/Kanalbitrate und eines entsprechenden Spreizfaktors für eine Anzahl von zur Übertragung der in der Warteschlange befindlichen Pakete erforderlichen Rahmen anhand der Größe der Warteschlange durch die RNC und
Bestimmen (306) des für das Senden geeignetsten Kanals durch die RNC.

7. Verfahren nach Anspruch 6, bei dem die Übertragungsprozedur nach Maßgabe mindestens einer Bedingung ausgewählt wird.

8. Verfahren nach Anspruch 7, bei dem die folgende Bedingung verwendet wird:
| | | | | |
|---|---|---|---|---|
| | Anzahl der zur | | | |
| WENN | Übertragung der Pakete erforderlic hen Rahmen | < T₃ | UND | Kanalbitr < R₁ ate |
| VERWENDE | Vorwärts zugriffs kanal FACH | ANDERENF ALLS | VERWENDE | zugewiesenen geteilten Kanal DSCH in Verbindung mit dem |
| | | | | zugewiesenen Kanal DCH |
wobei T3 und R3 implementierungsabhängige Schwellenwerte sind.

9. Verfahren nach Anspruch 1, bei dem unabhängig von einer Größe der Warteschlange von auf die Übertragung wartenden Paketdaten ein zugewiesener Kanal DCH für die Aufwärtsverbindung und ein zugewiesener geteilter Kanal DSCH in Verbindung mit dem DCH für die Abwärtsverbindung verwendet wird, wenn eine Übertragung in beide Richtungen erforderlich ist.

10. Verfahren nach Anspruch 9, das ferner die Verwendung einer schnellen Initialisierungsprozedur in Verbindung mit einer Paketdatenübertragung über den DCH und den DSCH umfasst.

11. Vorrichtung zum Auswählen einer Überträgungsprozedur zum Senden von in einer Warteschlange befindlichen Datenpaketen in einem zellularen Kommunikationssystem bei einer erforderlichen Übertragung in eine Richtung über eine Aufwärtsverbindung mit
einem Knoten B,
einer Funknetzsteuerung RNC,
wobei die Vorrichtung **dadurch gekennzeichnet ist, dass**
ein Benutzergerät UE (104), das eine Aufwärtsverbindung benötigt, so aufgebaut ist, dass es ein Messprotokoll an die Funknetzsteuerung (102) sendet,
der Knoten B (110), der das UE versorgt, das eine Aufwärtsverbindung benötigt, so beschaffen ist, dass er die Zunahme seines Rauschens berechnet und sie der RNC (102) meldet, und
die RNC (102) so beschaffen ist, dass sie eine Informations-/Kanalbitrate, einen entsprechenden Spreizfaktor und eine Anzahl von zur Übertragung der in der Warteschlange befindlichen Pakete erforderlichen Rahmen unter Verwendung der gelieferten Informationen berechnet und den für das Senden geeignetsten Kanal bestimmt.

## Revendications

1. Procédé de sélection d'une procédure de transmission pour la transmission de paquets de données en file d'attente dans un système de communication cellulaire, le procédé étant **caractérisé par** les étapes selon lesquelles, si une transmission unidirectionnelle sur une liaison montante est requise :
un équipement utilisateur, UE, requérant une liaison montante, envoie (202) un message de rapport de mesure à un contrôleur de réseau de radiocommunication, RNC ;
chaque noeud B traite l'UE requérant la liaison montante en calculant (204) son élévation de bruit et en rapportant celle-ci au RNC ;
le RNC calcule (206) un débit binaire d'information/canal, un facteur d'étalement correspondant, et un nombre de trames requis pour la transmission des paquets en file d'attente, au moyen des informations fournies ; et
le RNC détermine (208) le canal le plus approprié pour la transmission.

2. Procédé selon la revendication 1, dans lequel le message de rapport de mesure comprend la taille de la file d'attente des paquets, les exigences de qualité de service associées, l'intensité du signal pilote et le nombre de doigts verrouillés.

3. Procédé selon la revendication 2, dans lequel le débit binaire, le facteur d'étalement et le nombre de trames sont calculés à partir de la taille de la file d'attente de paquets.

4. Procédé selon la revendication 3, dans lequel la procédure de transmission est choisie en fonction d'au moins une condition.

5. Procédé selon la revendication 4, dans lequel les conditions suivantes sont utilisées :
Condition 1 :
**SI** *nombre de trames requis pour la transmission des paquets <* T₁
**ET** *débit binaire du canal <* R₁,
**UTILISER** *Canal d'accès aléatoire, RACH*
Condition 2 :
**SI** T1 < *nombre de trames requis pour la transmission des paquets <* T₂,
**ET** R₁ < *débit binaire du canal <* R₂,
**ET** *Elévation du bruit au noeud cible B <* I₁,
**ET** *Nombre d'utilisateurs vocaux <* V₁,
**UTILISER** *Canal de paquets commun, CPCH,*
*ou Canal d'accès amélioré, EACH*
Condition 3 :
**SI** *aucune des conditions 1 ou 2 n'est satisfaite,*
**UTILISER** *Canal dédié, DCH*
où T₁, T₂, R₁, R₂, I₁ et V₁ sont des valeurs seuil dépendant de l'implémentation.

6. Procédé selon l'une quelconque des revendications 1 à 5, **caractérisé, en outre, par** les étapes selon lesquelles, si une transmission unidirectionnelle sur une liaison descendante est requise :
le noeud B calcule (302) la taille d'une file d'attente de données en paquets attendant pour un UE particulier, et mesure (302) une quantité de capacité d'amplificateur de puissance linéaire non utilisée et un nombre d'utilisateurs vocaux ;
le RNC calcule (304) un débit binaire d'information/canal, et un facteur d'étalement correspondant pour un nombre de trames requis pour la transmission des paquets en file d'attente, à partir de la taille de la file d'attente ; et
le RNC détermine (306) le canal le plus approprié pour la transmission.

7. Procédé selon la revendication 6, dans lequel la procédure de transmission est choisie en fonction d'au moins une condition.

8. Procédé selon la revendication 7, dans lequel la condition suivante est utilisée :
**SI** *nombre de trames requis pour le transmission des paquets* < T₃
**ET** *débit binaire du canal <* R₃,
**UTILISER** *Canal d'accès direct, FA CH*
**AUTREMENT, UTILISER** *Canal partagé dédié, DSCH en association avec le Canal dédié, DCH*
où T₃ et R₃ sont des valeurs seuil dépendant de l'implémentation.

9. Procédé selon la revendication 1, dans lequel, si une transmission bidirectionnelle est requise, un canal dédié, DCH, est utilisé sur la liaison montante et un canal partagé dédié, DSCH, est utilisé en association avec le DCH sur la liaison descendante, quelle que soit la taille de la file d'attente des données en paquets attendant d'être transmises.

10. Procédé selon la revendication 9, comprenant, en outre, l'utilisation d'une procédure d'initialisation rapide en association avec un transfert de données en paquets sur le DCH et le DSCH.

11. Appareil pour la sélection d'une procédure de transmission pour la transmission de paquets de données en file d'attente dans un système de communication cellulaire, pour une transmission unidirectionnelle requise sur une liaison montante, l'appareil comprenant :
un noeud B ;
un contrôleur de réseau de radiocommunication, RNC ;
l'appareil étant **caractérisé en ce que** :
un équipement utilisateur, UE, (104) qui requière une liaison montante, est configuré de manière à envoyer un rapport de mesure au contrôleur de réseau de radiocommunication (102) ;
le noeud B (110) traitant l'UE requérant la liaison montante est conçu pour calculer son élévation de bruit et rapporter celle-ci au RNC (102) ; et
le RNC (102) est conçu pour calculer un débit binaire d'information/canal, un facteur d'étalement correspondant, et un nombre de trames requis pour la transmission des paquets de données en file d'attente, au moyen des informations fournies, et pour déterminer le canal le plus approprié pour la transmission.
